# EUROPÄISCHE PATENTANMELDUNG

(11) **EP 3 626 620 A1**
(43) Veröffentlichungstag der Anmeldung: **25.03.2020**
(21) Anmeldenummer: 19197049.0
(22) Anmeldetag: 12.09.2019
(51) Int. Cl.: B64D 11/06, B64C 1/18

(54) **BODENBEFESTIGUNGSBAUGRUPPE**

(30) Priorität: 19.09.2018 DE 102018122958
(71) Anmelder: Airbus Operations GmbH, 21129 Hamburg (DE)
(72) Erfinder: Roth, Ingo, 21129 Hamburg (DE); Hegenbart, Matthias, 21129 Hamburg (DE)
(74) Vertreter: Schicker, Silvia

(57) **Zusammenfassung**

Eine Bodenbefestigungsbaugruppe (10) zur lösbaren Befestigung eines Beins (103a, 103b) eines Gestells (102) an einem Fahrzeugboden (104) umfasst mindestens einen an dem Fahrzeugboden (104) fixierbaren Haltestift (12). Ferner umfasst die Bodenbefestigungsbaugruppe (10) ein Gestellbefestigungselement (14), das dazu eingerichtet ist, mit dem Bein (103a, 103b) des Gestells (102) verbunden zu werden und das mindestens einen Aufnahmeraum (16) zur Aufnahme des Haltestifts (12) umfasst. Eine Klemmvorrichtung (22) ist dazu eingerichtet, in den Aufnahmeraum (16) des Gestellbefestigungselements (14) eingeführt zu werden, um das Gestellbefestigungselement (14) formschlüssig mit dem Haltestift (12) zu verbinden.

## Beschreibung

Die Erfindung betrifft eine Bodenbefestigungsbaugruppe zur lösbaren Befestigung eines Gestells an einem Fahrzeugboden. Ferner betrifft die Erfindung ein mit einer derartigen Bodenbefestigungsbaugruppe ausgestattetes Gestellbefestigungssystem sowie ein mit einer derartigen Bodenbefestigungsbaugruppe und/oder einem derartigen Gestellbefestigungssystem ausgestattetes Flugzeug. Schließlich betrifft die Erfindung ein Verfahren zur lösbaren Befestigung eines Gestells an einem Fahrzeugboden.

In Fahrzeugen, wie zum Beispiel Flugzeugen, Bussen, Zügen, Schiffen, etc., werden Sitze oder Sitzreihen oft an in Längsrichtung des Fahrzeugs verlaufenden Sitzschienen befestigt. Derzeit gängige Sitzschienen umfassen sich regelmäßig wiederholende Öffnungen und Verjüngungen, sodass die Sitze oder Sitzreihen in vorgegebenen Abständen abhängig vom Abstand zweier benachbarter Verjüngungen in Längsrichtung der Sitzschienen im Fahrzeug angeordnet und befestigt werden können. Insbesondere die Betreiber moderner Verkehrsflugzeuge wünschen immer flexiblere Gestaltungsmöglichkeiten für den Innenraum der Passagierkabine. Hierzu gehört auch eine schnelle Anpassung der Anordnung der Sitze oder Sitzreihen. Beispielsweise sollen Sitzabstände zwischen hintereinander angeordneten Sitzen möglichst rasch und einfach verändert werden können, so dass die Unterteilung der Passagierkabine in eine Business Class Zone mit komfortableren größeren Sitzabständen und eine Economy Class Zone mit geringeren Sitzabständen möglichst rasch, einfach und flexibel verändert werden kann.

Der Erfindung liegt die Aufgabe zugrunde, eine Bodenbefestigungsbaugruppe anzugeben, die eine einfache und rasche Befestigung von Monumenten, Tischen, Sitzen und anderen Elementen am Boden eines Fahrzeugs ermöglicht. Ferner liegt der Erfindung die Aufgabe zugrunde, ein mit einer derartigen Bodenbefestigungsbaugruppe ausgestattetes Gestellbefestigungssystem sowie ein mit einer derartigen Bodenbefestigungsbaugruppe und/oder mit einem derartigen Gestellbefestigungssystem ausgestattetes Flugzeug bereitzustellen. Schließlich liegt der Erfindung die Aufgabe zugrunde, ein Verfahren anzugeben, dass eine rasche und einfache Befestigung von Monumenten, Tischen, Sitzen und anderen Elementen am Boden eines Fahrzeugs ermöglicht.

Diese Aufgabe wird durch eine Bodenbefestigungsbaugruppe mit den Merkmalen des Anspruchs 1, ein Gestellbefestigungssystem mit den Merkmalen des Anspruchs 10, ein Flugzeug mit den Merkmalen des Anspruchs 12 und ein Verfahren mit den Merkmalen des Anspruchs 13 gelöst.

Eine Bodenbefestigungsbaugruppe dient der lösbaren und damit variablen Befestigung eines Beins eines Gestells an einem Fahrzeugboden. Bei dem Fahrzeugboden kann es sich beispielsweise um den Boden einer Passagierkabine eines Verkehrsflugzeugs, aber auch um einen zur Installation in einem anderen Verkehrsmittel vorgesehenen Fahrzeugboden handeln. Das Gestell, das mittels der Bodenbefestigungsbaugruppe an dem Fahrzeugboden befestigt werden kann, kann beispielsweise das Gestell eines Passagiersitzes, aber auch das Tragegestell eines beliebigen anderen lösbar an dem Fahrzeugboden zu befestigenden Elements oder Monuments sein.

Die Bodenbefestigungsbaugruppe umfasst mindestens einen an dem Fahrzeugboden fixierbaren Haltestift. Grundsätzlich kann der Haltestift jede beliebige Form aufweisen. Vorzugsweise hat der Haltestift jedoch eine im Wesentlichen zylindrische, insbesondere eine im Wesentlichen kreiszylindrische Form. Zur Fixierung des Haltestifts an dem Fahrzeugboden kann der Fahrzeugboden eine an die Form und Größe des Haltestifts angepasste Bohrung aufweisen, in die der Haltestift eingesetzt werden kann, sodass der Haltestift in seinem an dem Fahrzeugboden fixierten Zustand aus dem Fahrzeugboden ragt. Im Bereich seines aus dem Fahrzeugboden ragenden Endes ist der Haltestift vorzugsweise abgerundet ausgebildet. In einer bevorzugten Ausführungsform der Bodenbefestigungsbaugruppe besteht der Haltestift aus rostfreiem Stahl und ist dadurch besonders wenig verschleißanfällig.

Ferner umfasst die Bodenbefestigungsbaugruppe ein Gestellbefestigungselement, das dazu eingerichtet ist, mit einem Bein des Gestells verbunden zu werden und das mindestens einen Aufnahmeraum zur Aufnahme des Haltestifts umfasst. Das Gestellbefestigungselement kann beispielsweise eine im Wesentlichen quaderförmige Grundform aufweisen. Der in dem Gestellbefestigungselement vorgesehene Aufnahmeraum hat vorzugsweise eine Form und Größe, die an die Form und Größe des Haltestifts angepasst sind. Insbesondere ist der Aufnahmeraum so beschaffen, dass der Haltestift im Wesentlichen spielfrei in dem Aufnahmeraum aufgenommen werden kann. Das Gestellbefestigungselement besteht vorzugsweise aus Aluminium, um das Gewicht der Bodenbefestigungsbaugruppe möglichst gering zu halten.

Ferner ist der Aufnahmeraum im Bereich einer Unterseite des Gestellbefestigungselements, die im an dem Fahrzeugboden montierten Zustand der Bodenbefestigungsbaugruppe dem Fahrzeugboden zugewandt ist, vorzugsweise offen ausgebildet, sodass das Gestellbefestigungselement auf den Haltestift aufgesetzt werden kann, um den Haltestift in den Aufnahmeraum des Gestellbefestigungselements einzuführen. Wenn die Bodenbefestigungsbaugruppe mehrere, beispielsweise in mindestens einer Reihe hintereinander angeordnete, Haltestifte aufweist, ist das Gestellbefestigungselement vorzugsweise mit einer entsprechenden Anzahl von Aufnahmeräumen versehen, d. h. jedem Haltestift ist vorzugsweise ein entsprechender Aufnahmeraum des Gestellbefestigungselements zugeordnet. Es ist jedoch auch denkbar, nicht alle in dem Gestellbefestigungselement vorgesehenen Aufnahmeräume mit entsprechenden Haltestiften auszufüllen.

Schließlich umfasst die Bodenbefestigungsbaugruppe eine Klemmvorrichtung, die dazu eingerichtet ist, in den Aufnahmeraum des Gestellbefestigungselements eingeführt zu werden, um das Gestellbefestigungselement formschlüssig mit dem Haltestift zu verbinden. Insbesondere ist die Klemmvorrichtung dazu eingerichtet, in dem Aufnahmeraum des Gestellbefestigungselement zwischen einer Innenfläche des Aufnahmeraums und einer Außenfläche des Haltestifts angeordnet zu werden, um einen Formschluss bzw. Reibschluss zwischen der Innenfläche des Aufnahmeraums und der Außenfläche des Haltestifts und damit zwischen dem Gestellbefestigungselement und dem Haltestift herzustellen und das Gestellbefestigungselement somit sicher mit dem Haltestift zu verbinden.

In einer bevorzugten Ausführungsform der Bodenbefestigungsbaugruppe ist der mindestens eine Haltestift so geformt und derart an dem Fahrzeugboden fixierbar, dass seine Längsachse im an dem Fahrzeugboden montierten und mit dem Gestell verbundenen Zustand der Bodenbefestigungsbaugruppe mit einer Hauptlastrichtung einer Last, die in einem definierten Lastfall auf das mit dem Gestellbefestigungselement verbundene Bein des Gestells wirkt, einen Winkel größer 90° bildet. Insbesondere bildet die Längsachse des Haltestifts mit der Hauptlastrichtung einen Winkel von ca. 100°. Zusätzlich oder alternativ dazu kann der Haltestift so geformt und derart an dem Fahrzeugboden fixierbar sein, dass seine Längsachse im an dem Fahrzeugboden montierten und mit dem Gestell verbundenen Zustand der Bodenbefestigungsbaugruppe, betrachtet in Richtung einer Hauptlastrichtung einer Last, die in einem definierten Lastfall auf das mit dem Gestellbefestigungselement verbundene Bein des Gestells wirkt, mit einer durch den Fahrzeugboden definierten Ebene einen Winkel kleiner 90° bildet. Insbesondere bildet die Längsachse des Haltestifts, betrachtet in Richtung der Hauptlastrichtung, mit der durch den Fahrzeugboden definierten Ebene einen Winkel von ca. 80°.

Bei dem definierten Lastfall kann es sich beispielsweise um einen Lastfall handeln, der bei einer Notlandung eines Flugzeugs auftritt. Die Hauptlastrichtung wird unter anderem durch die Ausrichtung des mittels der Bodenbefestigungsbaugruppe an dem Fahrzeugboden zu befestigenden Gestellbeins definiert und erstreckt sich beispielsweise im Wesentlichen koaxial zu dessen Längsachse. Die hier beschriebene Anordnung und Ausrichtung des Haltestifts relativ zur Hauptlastrichtung und relativ zu der durch den Fahrzeugboden definierten Ebene ermöglicht eine optimierte Lastableitung und somit eine leichtgewichtige Auslegung der Bodenbefestigungsbaugruppe ohne Einbußen hinsichtlich deren Lastaufnahmefähigkeiten.

Dementsprechend ist der zur Aufnahme des Haltestifts vorgesehene Aufnahmeraum des Gestellbefestigungselements vorzugsweise so geformt, dass seine Längsachse im an dem Fahrzeugboden montierten Zustand der Bodenbefestigungsbaugruppe mit einer Hauptlastrichtung einer Last, die in einem definierten Lastfall auf das mit dem Gestellbefestigungselement verbundene Bein des Gestells wirkt, einen Winkel größer 90° und insbesondere einen Winkel von ca. 100° bildet. Zusätzlich oder alternativ dazu kann der zur Aufnahme des Haltestifts vorgesehene Aufnahmeraum des Gestellbefestigungselements so geformt sein, dass seine Längsachse im an dem Fahrzeugboden montierten Zustand der Bodenbefestigungsbaugruppe, betrachtet in Richtung einer Hauptlastrichtung einer Last, die in einem definierten Lastfall auf das mit dem Gestellbefestigungselement verbundene Bein des Gestells wirkt, mit einer durch den Fahrzeugboden definierten Ebene einen Winkel kleiner 90° und insbesondere einen Winkel von ca. 80° bildet.

Der Haltestift kann mit mindestens einer ersten Nut zur Aufnahme der Klemmvorrichtung versehen sein. Beispielsweise kann sich die ersten Nut im Wesentlichen parallel zu einer durch den Fahrzeugboden definierten Ebene erstrecken, sodass die Klemmvorrichtung bei der Verbindung des Gestellbefestigungselements mit dem Haltestift, geführt durch die erste Nut, im Wesentlichen parallel zu der durch den Fahrzeugboden definierten Ebene verschoben werden kann. Dies erleichtert die Montage der Klemmvorrichtung. Im mit einem Fahrzeugboden verbundenen Zustand des Haltestifts erstreckt sich die an dem Haltestift vorgesehene erste Nut vorzugsweise im Wesentlichen parallel zu einer Längsachse des Fahrzeugs.

Das Gestellbefestigungselement kann im Bereich seines Aufnahmeraums mit mindestens einer zweiten Nut zur Aufnahme der Klemmvorrichtung versehen sein. Die zweite Nut erstreckt sich vorzugsweise im Wesentlichen parallel zu einer durch den Fahrzeugboden definierten Ebene, sodass die Klemmvorrichtung bei der Verbindung des Gestellbefestigungselements mit dem Haltestift, geführt durch die zweite Nut, im Wesentlichen parallel zu der durch den Fahrzeugboden definierten Ebene verschoben werden kann. Im mit einem Fahrzeugboden verbundenen Zustand des Haltestifts erstreckt sich die an dem Gestellbefestigungselement vorgesehene zweite Nut vorzugsweise im Wesentlichen parallel zu einer Längsachse des Fahrzeugs. Wenn das Gestellbefestigungselement auf den Haltestift aufgesetzt ist, sind liegt die im Bereich des Aufnahmeraums vorgesehene zweite Nut vorzugsweise der an dem Haltestift vorgesehenen ersten Nut gegenüber, sodass die Klemmvorrichtung sicher in den beiden an dem Gestellbefestigungselement und dem Haltestift vorgesehenen Nuten aufgenommen werden kann.

Das Gestellbefestigungselement ist vorzugsweise mit einer Verbindungsbohrung versehen, die dazu eingerichtet ist, ein Verbindungselement zur Verbindung des Beins des Gestells mit dem Gestellbefestigungselement aufzunehmen. In einer Ausführungsform des Gestellbefestigungselements erstreckt sich eine Längsachse der Verbindungsbohrung im Wesentlichen parallel zu einer durch den Fahrzeugboden definierten Ebene. Im mit einem Fahrzeugboden verbundenen Zustand der Bodenbefestigungsbaugruppe kann sich die Längsachse der Verbindungsbohrung insbesondere im Wesentlichen parallel zu einer Querachse des Fahrzeugs erstrecken. Die Verbindungsöffnung durchdringt dann insbesondere ein Befestigungselement, das sich von der Oberseite des Gestellbefestigungselements erstreckt. Das Gestellbein kann dann mittels eines Verbindungselements mit dem Gestellbefestigungselement verbunden werden, das parallel zu der durch den Fahrzeugboden definierten Ebene in die Verbindungbohrung des Gestellbefestigungselements sowie eine damit fluchtende Bohrung des Gestellbein zu eingeführt werden kann. Eine derartige Ausgestaltung des Gestellbefestigungselements ermöglicht die Verbindung des Gestellbefestigungselements mit einem Gestellbein, dessen Längsachse sich in einem Winkel deutlich kleiner 90° und insbesondere ca. 40 bis 70° relativ zu der Oberseite des Gestellbefestigungselements bzw. dem Fahrzeugboden erstreckt.

In einer alternativen Ausführungsform des Gestellbefestigungselements erstreckt sich eine Längsachse der Verbindungsbohrung im Wesentlichen senkrecht zu einer durch den Fahrzeugboden definierten Ebene. Die Verbindungsbohrung durchdringt dann insbesondere eine Oberseite des Gestellbefestigungselements, die im mit einem Fahrzeugboden verbundenen Zustand der Bodenbefestigungsbaugruppe von dem Fahrzeugboden abgewandt ist. Das Gestellbein kann dann beispielsweise mittels eines Verbindungselements mit dem Gestellbefestigungselement verbunden werden, das senkrecht zu der durch den Fahrzeugboden definierten Ebene in die Verbindungbohrung des Gestellbefestigungselements sowie eine damit fluchtende Bohrung des Gestellbeins eingeführt werden kann. Die Fixierung des Gestellbeins kann dann beispielsweise mit Hilfe einer auf das Verbindungselement aufgeschraubte Mutter realisiert werden.

Die Klemmvorrichtung kann mindestens einen Klemmsplint umfassen, der sich im an dem Fahrzeugboden montierten Zustand der Bodenbefestigungsbaugruppe im Wesentlichen parallel zu einer Längsachse des Gestellbefestigungselements und im Wesentlichen parallel zu einer durch den Fahrzeugboden definierten Ebene erstreckt. Falls gewünscht, kann der Klemmsplint mit einer dritten Nut versehen sein, die dazu eingerichtet ist, im an dem Fahrzeugboden montierten Zustand der Bodenbefestigungsbaugruppe den Haltestift aufzunehmen. Eine Ausbildung des Klemmsplints mit einer dritten Nut ist insbesondere dann vorteilhaft, wenn der Haltestift nicht mit einer ersten Nut versehen ist, da die an dem Klemmsplint vorgesehene dritte Nut dann die Montage des Klemmsplints erleichtert.

In einer bevorzugten Ausführungsform umfasst die Klemmvorrichtung zwei Klemmsplinte. Die Klemmsplinte können separat voneinander ausgebildet und zumindest im montierten Zustand der Bodenbefestigungsbaugruppe parallel zueinander angeordnet sein. Die beiden Klemmsplinte der Klemmvorrichtung können dazu eingerichtet sein, einen Haltestift oder mehrere in einer Reihe hintereinander angeordnete Haltestifte beidseitig zu umgreifen. Falls gewünscht, können der Haltestift oder die Haltestifte dann jeweils beidseitig mit einer ersten Nut versehen sein. Alternativ dazu können die Klemmsplinte der Klemmvorrichtung jedoch auch dazu eingerichtet sein, mit jeweiligen Außenflächen zweier nebeneinander angeordneter Haltestifte oder Haltestiftreihen zusammenzuwirken. Ferner ist es denkbar, die Klemmvorrichtung so auszugestalten, dass die beiden Klemmsplinte mittels eines Verbindungsstücks miteinander verbunden sind. Die Klemmsplinte können dann beispielsweise auch federnd ausgeführt sein, d. h. eine Federvorspannung aufweisen, die die beiden parallel zueinander ausgerichteten Klemmsplinte aufeinander zu drängt. Dadurch können die Klemmsplinte für eine besonders sichere Verbindung des Gestellbefestigungselements mit dem mindestens einen Haltestift sorgen.

Das Verbindungsstück kann ein erstes Element umfassen, das sich zwischen den Klemmsplinten erstreckt und damit die Klemmsplinte zumindest indirekt miteinander verbindet. Ferner kann sich das erste Element des Verbindungsstücks im Wesentlichen senkrecht zu den Klemmsplinten erstrecken. Schließlich kann sich das erste Element des Verbindungsstücks im an dem Fahrzeugboden montierten Zustand der Bodenbefestigungsbaugruppe im Wesentlichen parallel zu einer durch den Fahrzeugboden definierten Ebene erstrecken.

Ferner kann das Verbindungsstück zwei zweite Elemente umfassen, die sich von jeweiligen Enden der Klemmsplinte nach außen erstrecken. Insbesondere können sich die zweiten Elemente des Verbindungsstücks im Wesentlichen senkrecht zu den Klemmsplinten von den jeweiligen Enden der Klemmsplinte nach außen erstrecken. Vorzugsweise sind die zwei zweiten Elemente koaxial zueinander ausgerichtet.

Schließlich kann das Verbindungsstück zwei dritte Elemente umfassen, die sich von jeweiligen Enden der zweiten Elemente erstrecken und die zweiten Elemente dem ersten Element verbinden. Die zwei dritten Elemente sind vorzugsweise parallel zueinander ausgerichtet.

Ein Gestellbefestigungssystem umfasst einen Fahrzeugboden sowie eine Mehrzahl von an dem Fahrzeugboden fixierten Haltestiften. Beispielsweise können die Haltestifte in entsprechende Öffnungen eingesetzt sein, die in dem Fahrzeugboden ausgebildet sind. Der Fahrzeugboden kann ein Paneel oder mehrere Paneele umfassen, das/die beispielsweise aus einem Verbundmaterial bestehen kann/können. Ferner umfasst das Gestellbefestigungssystem ein erstes Gestellbefestigungselement, das dazu eingerichtet ist, mit einem ersten Bein eines lösbar an dem Fahrzeugboden zu befestigenden Gestells verbunden zu werden und das mindestens einen Aufnahmeraum zur Aufnahme eines Haltestifts umfasst. Ein zweites Gestellbefestigungselement des Sitzbefestigungssystems ist dazu eingerichtet, mit einem zweiten Bein des lösbar an dem Fahrzeugboden zu befestigenden Gestells verbunden zu werden und umfasst ebenfalls mindestens einen Aufnahmeraum zur Aufnahme eines Haltestifts. Bei dem an dem Fahrzeugboden zu befestigenden Gestell kann es sich beispielsweise um ein Sitzgestell, aber auch um ein Tragegestell eines anderen an dem Fahrzeugboden zu fixierenden Monuments oder Elements handeln.

Darüber hinaus ist das Gestellbefestigungssystem mit einer ersten Klemmvorrichtung versehen, die dazu eingerichtet ist, in den Aufnahmeraum des ersten Gestellbefestigungselements eingeführt zu werden, um das erste Gestellbefestigungselement formschlüssig mit mindestens einem Haltestift zu verbinden, der in dem Aufnahmeraum des ersten Gestellbefestigungselements aufgenommen ist. Eine zweite Klemmvorrichtung des Gestellbefestigungssystems ist dazu eingerichtet, in den Aufnahmeraum des ersten Gestellbefestigungselements eingeführt zu werden, um das zweite Gestellbefestigungselement formschlüssig mit mindestens einem Haltestift zu verbinden, der in dem Aufnahmeraum des zweiten Gestellbefestigungselements aufgenommen ist.

Die Haltestifte sind vorzugsweise im Bereich einer in dem Fahrzeugboden vorgesehenen Befestigungsschiene angeordnet. Die Haltestifte können in einer Reihe hintereinander angeordnet sein. Ferner kann das Gestellbefestigungssystem mehrere Reihen von hintereinander angeordneten Haltestiften umfassen. Die Befestigungsschiene kann im Vergleich zu einer durch den restlichen Fahrzeugboden definierten Ebene abgesenkt sein. Ferner kann die Befestigungsschiene mit einem Schutz- oder Verstärkungselement versehen bzw. bedeckt sein. Das Schutz- oder Verstärkungselement kann beispielsweise aus einem Glasfasermaterial bestehen. Wenn die Befestigungsschiene im Vergleich zu einer durch den restlichen Fahrzeugboden definierten Ebene abgesenkt ist, liegt ein aus dem Fahrzeugboden ragendes Ende der Haltestifte vorzugsweise im Wesentlichen in der durch den restlichen Fahrzeugboden definierten Ebene, d. h. die Erstreckung der Haltestifte in eine Richtung senkrecht zu einer durch die abgesenkte Befestigungsschiene definierten Ebene entspricht vorzugsweise der Tiefe der Absenkung der Befestigungsschiene relativ zu der durch den restlichen Fahrzeugboden definierten Ebene.

Die oben beschriebene Bodenbefestigungsbaugruppe und/oder das oben beschriebene Gestellbefestigungssystem ist/sind insbesondere zum Einsatz in einem Flugzeug geeignet. Ein Flugzeug umfasst daher eine oben beschriebene Bodenbefestigungsbaugruppe und/oder ein oben beschriebenes Gestellbefestigungssystem.

Bei einem Verfahren zur lösbaren Befestigung eines Beins eines Gestells an einem Fahrzeugboden wird zunächst mindestens ein Haltestift an dem Fahrzeugboden fixiert. Anschließend wird ein Gestellbefestigungselement derart auf den Haltestift aufgesetzt, dass der Haltestift in mindestens einem Aufnahmeraum des Gestellbefestigungselements aufgenommen wird. Falls mehrere Haltestifte vorhanden sind, weist das Gestellbefestigungselement vorzugsweise mehrere Aufnahmeräume auf und wird vorzugsweise derart auf die Haltestifte aufgesetzt, dass jeder Haltestift in einem entsprechenden Aufnahmeraum aufgenommen wird. Eine Klemmvorrichtung wird in den Aufnahmeraum des Gestellbefestigungselements eingeführt, um das Gestellbefestigungselement formschlüssig mit dem in dem Aufnahmeraum aufgenommenen Haltestift zu verbinden. Schließlich wird das Bein des an dem Fahrzeugboden zu befestigenden Gestells mit dem Gestellbefestigungselement verbunden.

In einer bevorzugten Variante des Verfahrens werden ein erstes und ein zweites Gestellbefestigungselement mittels einer ersten einer zweiten Klemmvorrichtung jeweils formschlüssig mit mindestens einem Haltestift verbunden. Ein erstes Bein des Gestells kann dann mit dem ersten Gestellbefestigungselement verbunden werden, während ein zweites Bein des Gestells mit dem zweiten Gestellbefestigungselement verbunden werden kann. Bei dem Gestell kann es sich beispielsweise um ein Sitzgestell handeln. Das erste und das zweite Gestellbefestigungselement werden vorzugsweise mit in einer Reihe hintereinander angeordneten Haltestiften verbunden.

Das erste Bein des Gestells kann durch ein erstes Verbindungselement mit dem ersten Gestellbefestigungselement verbunden werden, welches in eine Verbindungsbohrung des ersten Gestellbefestigungselements eingeführt wird, deren Längsachse sich im Wesentlichen parallel zu einer durch den Fahrzeugboden definierten Ebene erstreckt. Eine derartige Verbindung des ersten Gestellbeins mit dem Gestellbefestigungselement bietet sich an, wenn sich eine Längsachse des ersten Gestellbeins im an dem Fahrzeugboden befestigten Zustand in einem Winkel deutlich kleiner 90° und insbesondere ca. 40 bis 70° relativ zu der Oberseite des Gestellbefestigungselements bzw. dem Fahrzeugboden erstreckt.

Das zweite Bein des Gestells kann durch ein zweites Verbindungselement mit dem ersten Gestellbefestigungselement verbunden werden, welches in eine Verbindungsbohrung des zweiten Gestellbefestigungselements eingeführt wird, deren Längsachse sich im Wesentlichen senkrecht zu einer durch den Fahrzeugboden definierten Ebene erstreckt. Eine derartige Verbindung des zweiten Gestellbeins mit dem Gestellbefestigungselement bietet sich an, wenn sich das zweite Gestellbein im an dem Fahrzeugboden befestigten Zustand im Wesentlichen senkrecht zu der durch den Fahrzeugboden definierten Ebene erstreckt.

Bevorzugte Ausführung, Erfindung werden im Folgenden anhand der beigefügten schematischen Zeichnungen näher beschrieben, von denen
- Figuren 1 bis 3: verschiedene Ansichten einer Bodenbefestigungsbaugruppe zeigen,
- Figuren 4 bis 6: verschiedene Ansichten eines Gestellbefestigungselements und einer Klemmvorrichtung der Bodenbefestigungsbaugruppe gemäß der Figuren 1 bis 3 zeigen,
- Figuren 7 bis 9: verschiedene Ansichten eines Gestellbefestigungselements und einer Klemmvorrichtung einer alternativen Ausgestaltungsform einer Bodenbefestigungsbaugruppe zeigen,
- Figur 10: ein Gestellbefestigungssystem zeigt, das eine Bodenbefestigungsbaugruppe gemäß der Figuren 1 bis 3 sowie eine Bodenbefestigungsbaugruppe mit einem Gestellbefestigungselement und einer Klemmvorrichtung gemäß der Figuren 7 bis 9 umfasst,
- Figur 11: eine weitere alternative Ausgestaltungsform einer Bodenbefestigungsbaugruppe zeigt, und
- Figur 12: ein Flugzeug mit einem Gestellbefestigungssystem gemäß Figur 10 zeigt.

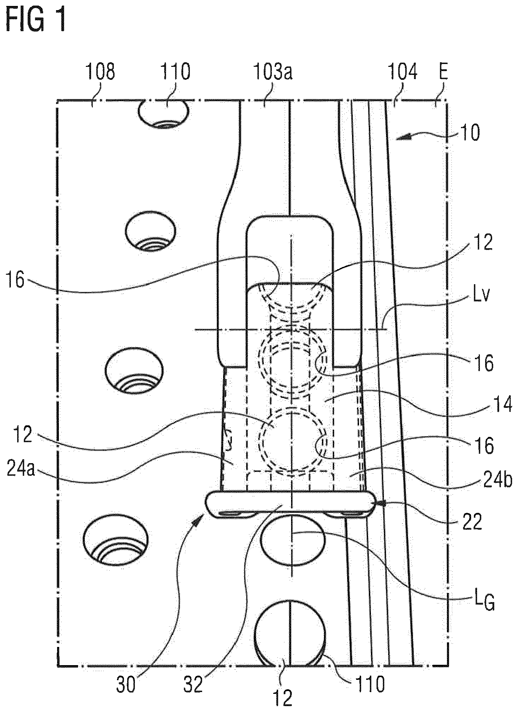

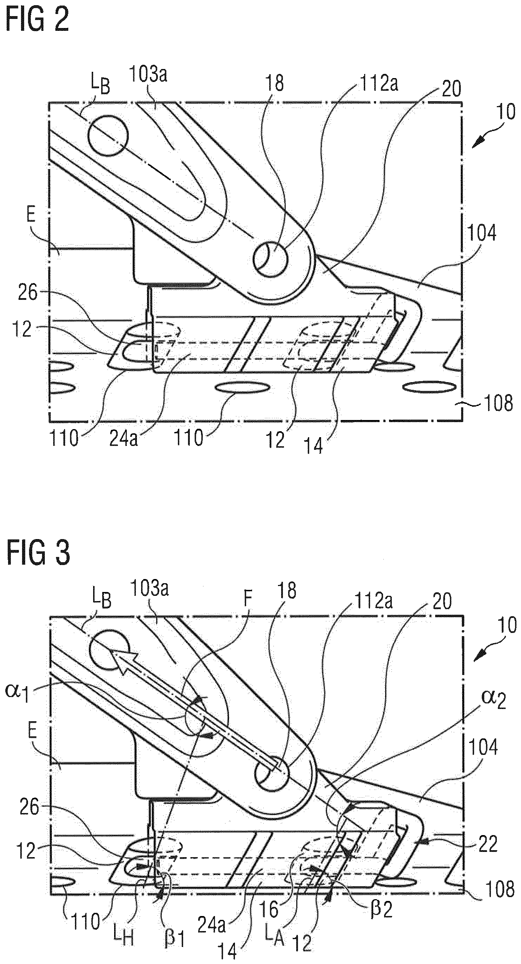

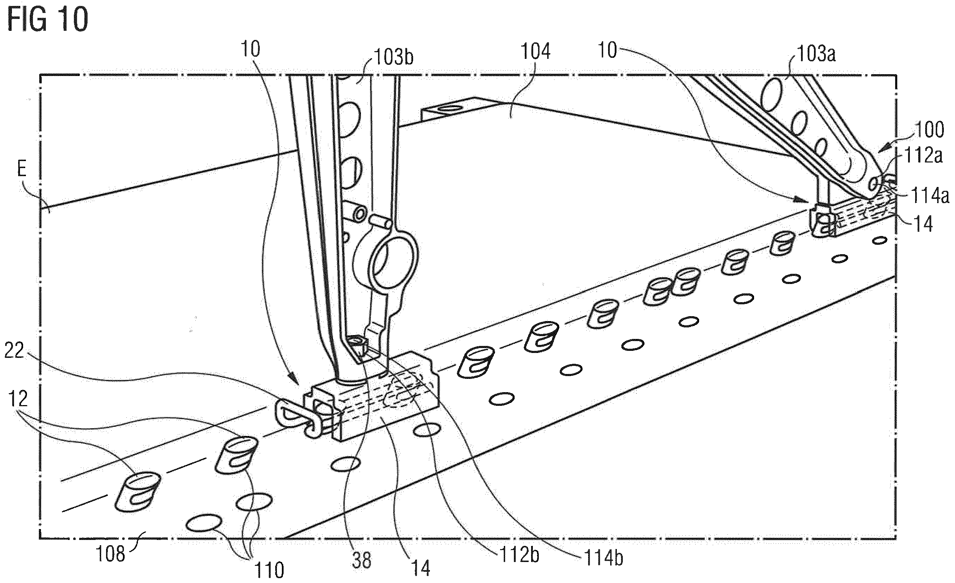

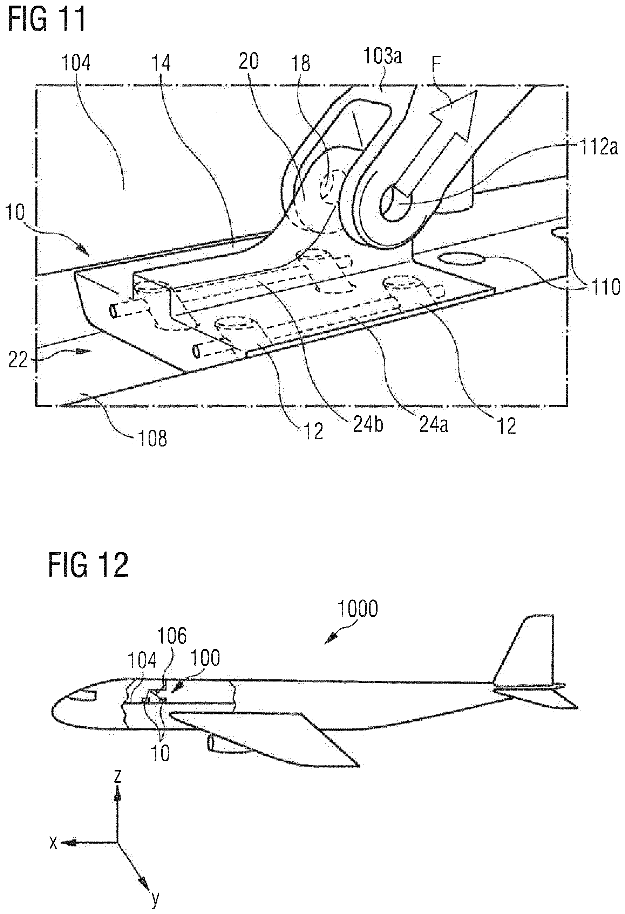

Die Figuren 1 bis 3 zeigen verschiedene Ansichten einer Bodenbefestigungsbaugruppe 10. Die Bodenbefestigungsbaugruppe 10 bildet einen Teil eines in Figur 10 näher veranschaulichten Gestellbefestigungssystems 100, das dazu dient, ein Gestell 102 lösbar an einem Fahrzeugboden 104 zu befestigen. Insbesondere wird mittels der Bodenbefestigungsbaugruppe 10 ein Bein 103a des Gestells 120 lösbar an dem Fahrzeugboden 104 befestigt. Bei dem Fahrzeugboden 104 handelt es sich bei dem in Figur 10 gezeigten Gestellbefestigungssystem 100 um den Boden einer Passagierkabine eines in Figur 11 veranschaulichen Flugzeugs 1000. Das mittels des Gestellbefestigungssystem 100 an dem Fahrzeugboden 104 befestigte Gestell 102 ist bei dem in Figur 11 gezeigten Flugzeug 1000 in Form eines Sitzgestells eines Passagiersitzes 106 ausgebildet.

Der Fahrzeugboden 104 wird durch eine Mehrzahl von miteinander verbundenen Bodenpaneelen gebildet und ist mit einer Befestigungsschiene 108 versehen, die im Vergleich zu einer durch den restlichen Fahrzeugboden 104 definierten Ebene abgesenkt ist. Im Bereich der Befestigungsschiene 108 sind zwei zueinander parallele Reihen von hintereinander angeordneten Bohrungen 110 in dem Fahrzeugboden 104 ausgebildet. Im in dem Flugzeug 1000 montierten Zustand des Fahrzeugbodens 104 erstrecken sich die Reihen von Bohrungen 110 im Wesentlichen parallel zu einer Längsachse des Flugzeugs 1000, d.h. in x-Richtung des Flugzeugs 1000.

Die in den Figuren 1 bis 3 gezeigte Bodenbefestigungsbaugruppe 10 umfasst mindestens einen an dem Fahrzeugboden 104 fixierbaren Haltestift 12. Insbesondere umfasst die in den Figuren 1 bis 3 veranschaulichte Ausführungsform der Bodenbefestigungsbaugruppe 10 zwei Haltestifte 12, die hintereinander in einer der Reihen von in dem Fahrzeugboden 104 ausgebildeten Bohrungen 110 angeordnet sind. Aus dem Fahrzeugboden 104 bzw. der abgesenkten Befestigungsschiene 108 des Fahrzeugbodens 104 ragende Enden der Haltestifte 12 sind abgerundet ausgebildet und erstrecken sich in eine Ebene E, die durch den die Befestigungsschiene 108 umgebenden restlichen Fahrzeugboden 104 definiert wird. Jeder der Haltestifte 12 besteht aus rostfreiem Stahl.

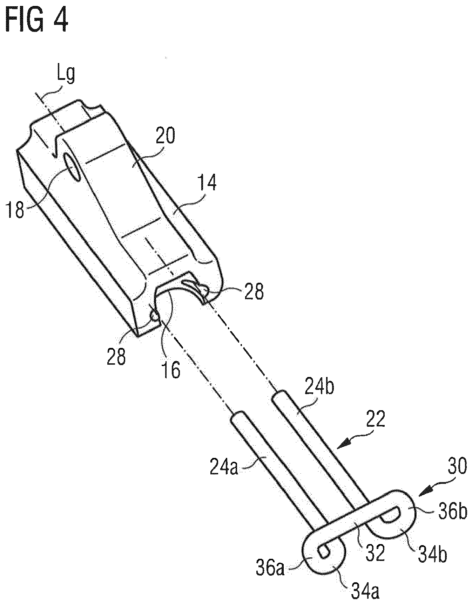

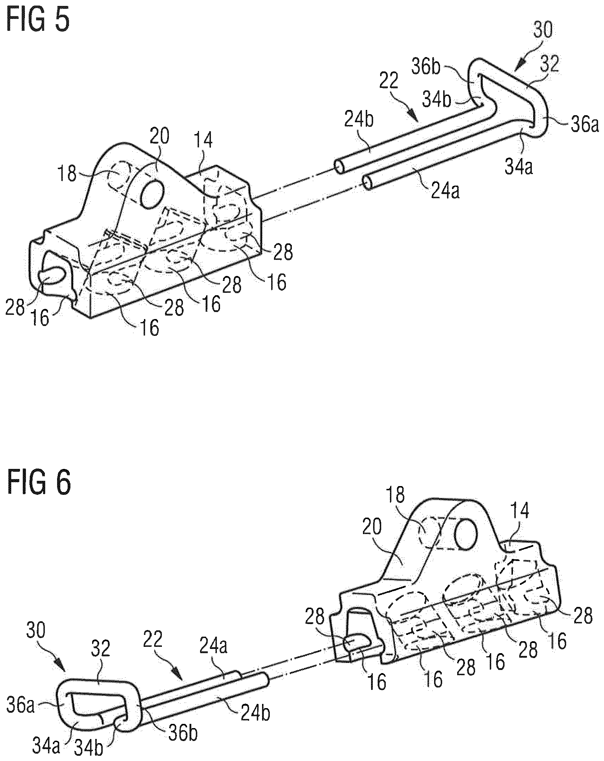

Ferner umfasst die Bodenbefestigungsbaugruppe 10 ein in den Explosionsdarstellungen gemäß der Figuren 4 bis 6 detaillierter veranschaulichtes Gestellbefestigungselement 14. Das aus Aluminium bestehende Gestellbefestigungselement 14 weist mindestens einen Aufnahmeraum 16 zur Aufnahme eines Haltestifts 12 auf. Bei der in den Figuren 1 bis 3 veranschaulichte Ausführungsform der Bodenbefestigungsbaugruppe 10 sind in dem Gestellbefestigungselement 14 vier Aufnahmeräume 16 vorgesehen (siehe insbesondere Figuren 5 und 6), in denen jeweils ein Haltestift 12 aufgenommen werden kann. Hierzu ist jeder der Aufnahmeräume 16 derart an die Form und Größe der Haltestifte 12 angepasst, dass ein Haltestift 12 im Wesentlichen spielfrei in dem Aufnahmeraum 16 aufgenommen werden kann. Ferner ist jeder der Aufnahmeräume 16 im Bereich einer Unterseite des Gestellbefestigungselements 14, die dem Fahrzeugboden 104 zugewandt ist, offen ausgebildet, sodass das Gestellbefestigungselement 14 an einer gewünschten Position auf die Reihe von Haltestiften 12 aufgesetzt werden kann, um die Haltestifte 12 in die entsprechenden Aufnahmeräume 16 des Gestellbefestigungselements 14 einzuführen.

In Abhängigkeit der Positionierung des Gestellbefestigungselements 14 relativ zu der Reihe von Haltestiften 12 ist es nicht zwingend erforderlich, jeden der in dem Gestellbefestigungselement 14 vorgesehene Aufnahmeräume 16 mit einem Haltestift 12 auszufüllen. Beispielsweise sind in der Darstellung gemäß der Figuren 1 bis 3 lediglich zwei der in dem Gestellbefestigungselement 14 vorgesehene vier Aufnahmeräume 16 mit Haltestiften 12 ausgefüllt, während die anderen beiden Aufnahmeräume 16 frei bleiben.

Wie am besten in den Figuren 1 bis 3 und 10 zu erkennen ist, ist das Gestellbefestigungselement 14 dazu eingerichtet, mit dem Bein 103a des Gestells 102 verbunden zu werden. Hierzu ist das Gestellbefestigungselement 14 mit einer Verbindungsbohrung 18 versehen. Bei dem in den Figuren 1 bis 6 gezeigten Gestellbefestigungselement 14 durchdringt die Verbindungsbohrung 18 ein Befestigungselement 20, das sich von einer von dem Fahrzeugboden 104 abgewandten Oberseite des Gestellbefestigungselements 14 erstreckt. Eine Längsachse L_{V} der Verbindungsbohrung 18 erstreckt sich im Wesentlichen parallel zu der durch den Fahrzeugboden 104 definierten Ebene E und im Wesentlichen parallel zu einer Querachse, d.h. in y-Richtung des Flugzeugs 1000.

Zur Verbindung des Gestellbeins 103a mit dem Gestellbefestigungselement 14 kann das Gestellbein 103a derart relativ zu dem Gestellbefestigungselement 14 positioniert werden, dass eine in dem Gestellbein 103a ausgebildete Bohrung 112a mit der Verbindungsbohrung 18 des Gestellbefestigungselements 14 fluchtet. Anschließend kann ein Verbindungselement 114a (siehe Figur 10) in die Bohrung 112a des Gestellbeins 103a und die Verbindungsbohrung 18 eingeführt und beispielsweise durch Muttern oder andere Befestigungsmittel befestigt werden. Folglich kann das Gestellbefestigungselement 14 auch mit einem Gestellbein 103a verbunden werden, dessen Längsachse L_{B} sich in einem Winkel deutlich kleiner 90° und insbesondere, wie gezeigt, in einem Winkel von ca. 45° relativ zu der Oberseite des Gestellbefestigungselements 14 bzw. dem Fahrzeugboden 104 erstreckt.

Wie am besten in den Figuren 1 bis 3 zu erkennen ist, erstrecken sich die Haltestifte 12 nicht senkrecht zu der durch den Fahrzeugboden 104 definierten Ebene E. Vielmehr ist jeder der Haltestifte 12 so geformt und derart an dem Fahrzeugboden 104 fixiert, dass seine Längsachse L_{H} mit einer Hauptlastrichtung F einer Last, die in einem definierten Lastfall auf das mit dem Gestellbefestigungselement 14 verbundene Gestellbein 103a wirkt, einen Winkel α1 größer 90° bildet. Insbesondere bildet die Längsachse L_{H} eines jeden Haltestift 12 mit der Hauptlastrichtung F einen Winkel α1 von ca. 100°. Darüber hinaus ist jeder der Haltestifte 12 so geformt und derart an dem Fahrzeugboden 104 fixiert, dass seine Längsachse L_{H}, betrachtet in Richtung der Hauptlastrichtung F, mit der durch den Fahrzeugboden 104 definierten Ebene E einen Winkel β1 kleiner 90°, und insbesondere einen Winkel β1 von ca. 80° bildet.

Bei dem definierten Lastfall handelt es sich insbesondere um einen Lastfall, der bei einer Notlandung des Flugzeugs 1000 auftritt. Die Hauptlastrichtung F wird unter anderem durch die Ausrichtung des mittels der Bodenbefestigungsbaugruppe 10 an dem Fahrzeugboden 104 befestigten Gestellbeins 103a definiert und erstreckt sich hier im Wesentlichen koaxial zur Längsachse L_{B} des Gestellbeins 103a. Die hier beschriebene Anordnung und Ausrichtung der Haltestifte 12 relativ zur Hauptlastrichtung F und relativ zu der durch den Fahrzeugboden 104 definierten Ebene E ermöglicht eine optimierte Lastableitung und somit eine leichtgewichtige Auslegung der Bodenbefestigungsbaugruppe 10 ohne Einbußen hinsichtlich deren Lastaufnahmefähigkeiten.

Dementsprechend ist jeder der zur Aufnahme der Haltestifte 12 vorgesehenen Aufnahmeräume 16 des Gestellbefestigungselements 14 so geformt, dass seine Längsachse L_{A} mit der Hauptlastrichtung F, einen Winkel α2 größer 90° und insbesondere einen Winkel α2 von ca. 100° bildet. Ferner ist jeder der Aufnahmeräume 16 des Gestellbefestigungselements 14 so geformt, dass seine Längsachse L_{A}, betrachtet in Richtung der Hauptlastrichtung F, mit der durch den Fahrzeugboden 104 definierten Ebene E einen Winkel β2 kleiner 90° und insbesondere einen Winkel β2 von ca. 80° bildet.

Schließlich umfasst die Bodenbefestigungsbaugruppe 10 eine Klemmvorrichtung 22, die dazu eingerichtet ist, in den mindestens einen Aufnahmeraum 16 des Gestellbefestigungselements 14 eingeführt zu werden, um das Gestellbefestigungselement 14 formschlüssig mit dem in dem Aufnahmeraum 16 aufgenommenen Haltestift 12 zu verbinden. Insbesondere kann die Klemmvorrichtung 22, bzw. ein Abschnitt der Klemmvorrichtung 22, zwischen einer Innenfläche des Aufnahmeraums 16 und einer Außenfläche des in dem Aufnahmeraum 16 aufgenommenen Haltestifts 12 angeordnet werden, um einen Formschluss bzw. Reibschluss zwischen der Innenfläche des Aufnahmeraums 16 und der Außenfläche des Haltestifts 12 und damit zwischen dem Gestellbefestigungselement 14 und dem Haltestift 12 herzustellen.

Die Klemmvorrichtung 22 umfasst zwei Klemmsplinte 24a, 24b, die sich parallel zueinander, parallel zu einer Längsachse L_{G} des Gestellbefestigungselements 14 und parallel zu der durch den Fahrzeugboden 104 definierten Ebene E in x-Richtung des Flugzeugs 1000 erstrecken. Bei der in den Figuren 1 bis 3 gezeigten Bodenbefestigungsbaugruppe 10 sind die beiden Klemmsplinte 24a, 24b der Klemmvorrichtung 22 dazu eingerichtet, die in den Aufnahmeräumen 16 des Gestellbefestigungselements 14 aufgenommenen Haltestifte 12 beidseitig zu umgreifen. Um die Montage der Klemmvorrichtung 22 und insbesondere die Einführung der Klemmsplinte 24a, 24b der Klemmvorrichtung 22 zwischen die Innenflächen der in dem Gestellbefestigungselement 14 ausgebildeten Aufnahmeräume 16 und die Außenflächen der Haltestifte 12 zu erleichtern, sind die Haltestifte 12 mit mindestens einer ersten Nut 26 zur Aufnahme der Klemmvorrichtung 22 versehen. Ferner ist das Gestellbefestigungselement 14 im Bereich der Aufnahmeräume 16 mit mindestens einer zweiten Nut 28 zur Aufnahme der Klemmvorrichtung 22 versehen.

Insbesondere sind die Haltestifte 12 im Bereich ihrer Außenflächen beidseitig mit einer ersten Nut 26 versehen, die sich parallel zu der durch den Fahrzeugboden 104 definierten Ebene E in x-Richtung des Flugzeugs 1000 erstreckt und deren Form und Größe an die Form und Größe der Klemmsplinte 24a, 24b der Klemmvorrichtung 22 angepasst ist. Jeder ersten Nut 26 liegt eine zweite Nut 28 gegenüber, die in der jeweiligen Innenfläche der in dem Gestellbefestigungselement 14 vorgesehenen Aufnahmeraums 16 ausgebildet ist und sich parallel zu der ersten Nut 26, und somit ebenfalls parallel zu der durch den Fahrzeugboden 104 definierten Ebene E in x-Richtung des Flugzeugs 1000 erstreckt. Dementsprechend können die Klemmsplinte 24a, 24b der Klemmvorrichtung 22 ebenfalls parallel zu der durch den Fahrzeugboden 104 definierten Ebene E in x-Richtung des Flugzeugs 1000, geführt durch die Nuten 26, 24, in die Aufnahmeräume 16 des Gestellbefestigungselements 14, d.h. zwischen die Innenflächen der in dem Gestellbefestigungselement 14 ausgebildeten Aufnahmeräume 16 und die Außenflächen der Haltestifte 12 eingeführt werden, um den gewünschten Formschluss bzw. Reibschluss zwischen dem Gestellbefestigungselement 14 und den Haltestiften 12 herzustellen.

Bei der Klemmvorrichtung 22 der in den Figuren 1 bis 3 gezeigten Bodenbefestigungsbaugruppe 10 sind die beiden Klemmsplinte 24a, 24b mittels eines Verbindungsstücks 30 miteinander verbunden und federnd ausgeführt. Insbesondere weisen die Klemmsplinte 24a, 24b eine Federvorspannung auf, die die beiden parallel zueinander ausgerichteten Klemmsplinte 24a, 24b aufeinander zu drängt und dadurch für eine besonders sichere Umklammerung der Haltestifte 12 durch die Klemmsplinte 24a, 24b sorgt.

Das Verbindungsstück 30 umfasst ein erstes Element 32, das sich im Wesentlichen senkrecht zu den Klemmsplinten 24a, 24b zwischen den Klemmsplinten 24a, 24b erstreckt und damit die Klemmsplinte 24a, 24b zumindest indirekt miteinander verbindet. Im an dem Fahrzeugboden 104 montierten Zustand der Bodenbefestigungsbaugruppe 10 erstreckt sich das erste Element 32 des Verbindungsstücks 30 im Wesentlichen parallel zu der durch den Fahrzeugboden 104 definierten Ebene E. Ferner umfasst das Verbindungsstück 30 zwei zweite Elemente 34a, 34b, die sich von jeweiligen Enden der Klemmsplinte 24a, 24b im Wesentlichen senkrecht zu den Klemmsplinten 24a, 24b nach außen erstrecken. Die beiden zweiten Elemente 34a, 34b sind koaxial zueinander ausgerichtet.

Schließlich umfasst das Verbindungsstück 30 zwei dritte Elemente 36a, 36b, die sich von jeweiligen Enden der zweiten Elemente 34a, 34b und die zweiten Elemente 34a, 34b dem ersten Element 32 verbinden. Die zwei dritten Elemente 36a, 36b des Verbindungsstücks 30 sind parallel zueinander ausgerichtet und erstrecken sich im Wesentlichen senkrecht zu den zwei zweiten Elementen 34a, 34b. Wie aus den Figuren 4 bis 6 ersichtlich wird, erstrecken sich die zwei dritten Elemente 36a, 36b des Verbindungsstücks 30 im unmontierten Zustand der Bodenbefestigungsbaugruppe 10 auch im Wesentlichen senkrecht zu den Klemmsplinten 24a, 24b. Im montierten Zustand der Bodenbefestigungsbaugruppe 10 bilden die zwei dritten Elemente 36a, 36b des Verbindungsstücks 30 mit den Klemmsplinten 24a, 24b dagegen einen Winkel von ca. 115°. Die Klemmvorrichtung 22 wird dadurch unter eine Federvorspannung gesetzt, die einer Lösung der Klemmvorrichtung 22 aus ihrer Position im Eingriff mit den Haltestiften 12 und dem Gestellbefestigungselement 14 entgegenwirkt.

Um das Gestellbein 103a lösbar an dem Fahrzeugboden 104 zu befestigen, wird zunächst mindestens ein Haltestift 12 an dem Fahrzeugboden 104 fixiert. Insbesondere wird, eine Mehrzahl von Haltestiften 12 in mindestens einer Reihe hintereinander in die Bohrungen 110 eingesetzt, die in der Befestigungsschiene 108 des Fahrzeugbodens 104 ausgebildet sind (siehe Figuren 1 bis 3 und 10). Anschließend wird das Gestellbefestigungselement 14 derart auf die Haltestifte 12 aufgesetzt, dass die Haltestifte 12 in den entsprechenden Aufnahmeräumen 16 des Gestellbefestigungselements 14 aufgenommen werden. Schließlich wird die Klemmvorrichtung 22 in die Aufnahmeräume 16 des Gestellbefestigungselements 14 eingeführt, um das Gestellbefestigungselement 14 formschlüssig mit den Haltestiften 12 zu verbinden. Schließlich wird das Gestellbein 103a mit dem Gestellbefestigungselement 14 verbunden.

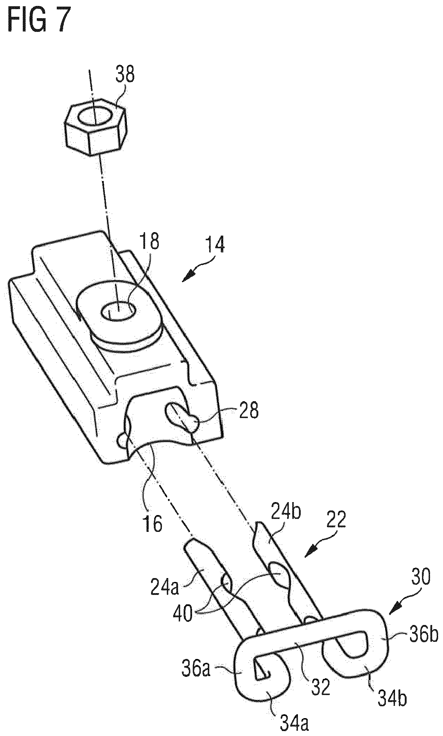

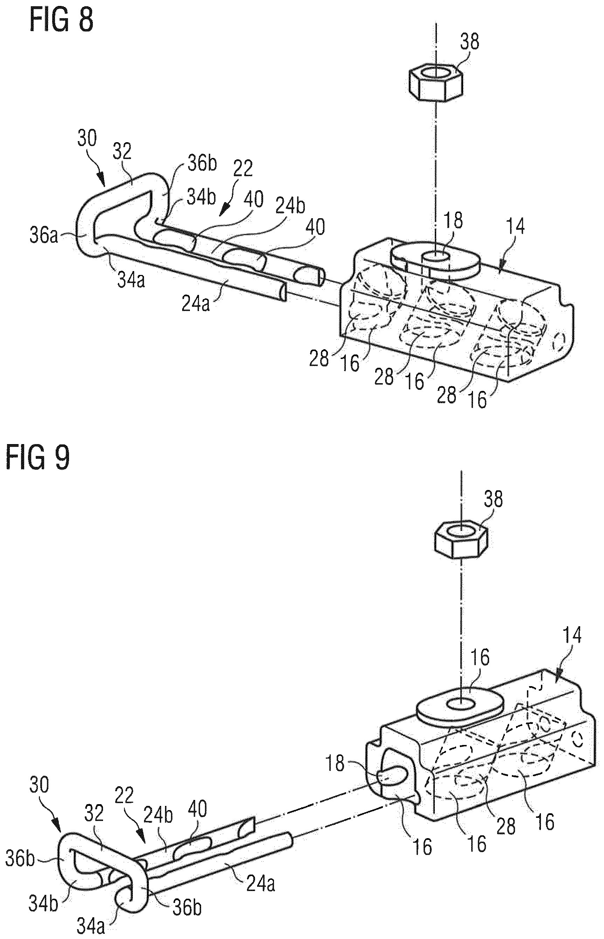

Das in Figur 10 gezeigte Gestellbefestigungssystem 100 dient dazu, ein Gestell 102 lösbar an dem Fahrzeugboden 104 zu befestigen, das neben dem Bein 103a ein weiteres Bein 103b umfasst. Anders als das Bein 103a erstreckt sich das weitere Bein 103b jedoch nicht in einem Winkel von ca. 45° relativ zu der Oberseite des Gestellbefestigungselements 14 bzw. dem Fahrzeugboden 104. Stattdessen erstreckt sich das weitere Gestellbein 103b im Wesentlichen senkrecht zu der Oberseite des Gestellbefestigungselements 14 bzw. dem Fahrzeugboden 104. Die zur Befestigung des weiteren Gestellbeins 103b an dem Fahrzeugboden 104 genutzte Bodenbefestigungsbaugruppe 10 weist daher ein in den Figuren 7 bis 9 detailliert veranschaulichtes modifiziertes Gestellbefestigungselement 14 auf.

Das in den Figuren 7 bis 9 gezeigte Gestellbefestigungselement 14 unterscheidet sich von dem in den Figuren 1 bis 6 veranschaulichten Gestellbefestigungselement 14 dadurch, dass das Gestellbefestigungselement 14 gemäß der Figuren 7 bis 9 mit einer Verbindungsbohrung 18 versehen ist, deren Längsachse L_{V} sich im Wesentlichen senkrecht zu der durch den Fahrzeugboden 104 definierten Ebene E erstreckt. Ferner durchdringt die Verbindungsbohrung 18 eine Oberseite des Gestellbefestigungselements 14, die im mit dem Fahrzeugboden 104 verbundenen Zustand der Bodenbefestigungsbaugruppe 10 von dem Fahrzeugboden 104 abgewandt ist. Zur Verbindung des weiteren Gestellbeins 103b mit dem Gestellbefestigungselement 14 wird ein Verbindungselement 114b (schematisch in Figur 10 angedeutet) senkrecht zu der durch den Fahrzeugboden 104 definierten Ebene E in die Verbindungbohrung 18 des Gestellbefestigungselements 14 sowie eine damit fluchtende Bohrung 112b des weiteren Gestellbeins 103b eingeführt und mit Hilfe einer auf das Verbindungselement 114b aufgeschraubten Mutter 38 fixiert.

Ferner unterscheidet sich die in den Figuren 7 bis 9 gezeigte Klemmvorrichtung 22 von der in den Figuren 4 bis 6 veranschaulichte Klemmvorrichtung 22. Insbesondere sind die Klemmsplinte 24a, 24b der Klemmvorrichtung 22 im Bereich ihrer Innenflächen mit dritten Nuten 40 versehen. Jede der dritten Nuten 40 ist dazu eingerichtet, einen Haltestift 12 derart aufzunehmen, dass eine dem jeweiligen Klemmsplint 24a, 24b zugewandte Außenfläche des Haltestift 12 an einer Innenfläche der Nut 40 anliegt. Die Ausbildung eines Klemmsplints 24a, 24b mit dritten Nuten 40 ist insbesondere dann vorteilhaft, wenn die Haltestifte 12 nicht mit ersten Nuten 26 versehen sind, da die an dem Klemmsplint 24a, 24b vorgesehenen dritten Nuten dann die Montage des Klemmsplints 24a, 24b erleichtert.

Zur Befestigung des zwei Beine 103a, 103b umfassenden Gestells 102 an dem Fahrzeugboden 104 werden zunächst ein erstes und ein zweites Gestellbefestigungselement 14 mittels einer ersten und einer zweiten Klemmvorrichtung 22 jeweils formschlüssig mit mindestens einem Haltestift 12 verbunden, wobei es sich bei dem ersten Gestellbefestigungselement 14 um ein in den Figuren 1 bis 6 gezeigtes Gestellbefestigungselement 14 handelt, während es sich bei dem zweiten Gestellbefestigungselement 14 um ein in den Figuren 7 bis 9 gezeigtes Gestellbefestigungselement 14 handelt. Da bei dem in der Figur 10 gezeigten Gestellbefestigungssystem 100 alle Haltestifte 12 beidseitig mit ersten Nuten 26 versehen sind, können sowohl die erste als auch die zweite Klemmvorrichtung 22 in Form einer in den Figuren 4 bis 6 gezeigten Klemmvorrichtung ausgeführt sein, bei der die Klemmsplinte 24a, 24b keine dritte Nut aufweisen.

Das Gestellbein 103a wird durch das Verbindungselement 114a mit dem ersten Gestellbefestigungselement 14 verbunden, wobei das Verbindungselement 114a in die Verbindungsbohrung 18 des ersten Gestellbefestigungselements 14 sowie in die mit der Verbindungsbohrung 18 fluchtende Bohrung 114a des Gestellbeins 103a eingeführt wird. Das weitere Gestellbein 103b wird durch das Verbindungselement 114b mit dem zweiten Gestellbefestigungselement 14 verbunden, wobei das Verbindungselement 114b in die Verbindungsbohrung 18 des zweiten Gestellbefestigungselements 14 sowie in die mit der Verbindungsbohrung 18 fluchtende Bohrung 114b des weiteren Gestellbeins 114b eingeführt und schließlich mittels der Mutter 38 fixiert wird.

Die in Figur 11 gezeigte alternative Ausführungsform einer Bodenbefestigungsbaugruppe 10 unterscheidet sich von der in den Figuren 1 bis 3 veranschaulichten Anordnung dadurch, dass die Haltestifte 12 in zwei zueinander parallelen Reihen angeordnet sind, d.h. dass in beide Reihen von in der Befestigungsschiene 108 des Fahrzeugbodens 104 ausgebildeten Bohrungen 110 Haltestifte 12 eingesetzt sind. Dementsprechend ist das Gestellbefestigungselement 14 auch mit zwei Reihen von Aufnahmeräumen 16 versehen. Die Klemmvorrichtung 22 der in Figur 11 gezeigten Bodenbefestigungsbaugruppe 10 umfasst zwei Klemmsplinte 24a, 24b, die separat voneinander ausgebildet sind. Im Übrigen entsprechen der Aufbau und die Funktion der Bodenbefestigungsbaugruppe 10 gemäß Figur 11 dem Aufbau und der Funktion der in den Figuren 1 bis 3 veranschaulichten Anordnung.

## Patentansprüche

1. Bodenbefestigungsbaugruppe (10) zur lösbaren Befestigung eines Beins (103a, 103b) eines Gestells (102) an einem Fahrzeugboden (104), mit:
- mindestens einem an dem Fahrzeugboden (104) fixierbaren Haltestift (12),
- einem Gestellbefestigungselement (14), das dazu eingerichtet ist, mit dem Bein (103a, 103b) des Gestells (102) verbunden zu werden und das mindestens einen Aufnahmeraum (16) zur Aufnahme des Haltestifts (12) umfasst, und
- eine Klemmvorrichtung (22), die dazu eingerichtet ist, in den Aufnahmeraum (16) des Gestellbefestigungselements (14) eingeführt zu werden, um das Gestellbefestigungselement (14) formschlüssig mit dem Haltestift (12) zu verbinden.

2. Bodenbefestigungsbaugruppe nach Anspruch 1,
wobei
- der Haltestift (12) so geformt und derart an dem Fahrzeugboden (104) fixierbar ist, dass seine Längsachse (L_{H}) im an dem Fahrzeugboden (104) montierten und mit dem Gestell (102) verbundenen Zustand der Bodenbefestigungsbaugruppe (10) mit einer Hauptlastrichtung (F) einer Last, die in einem definierten Lastfall auf das mit dem Gestellbefestigungselement (14) verbundene Bein (103a) des Gestells (102) wirkt, einen Winkel (α1) größer 90° und insbesondere einen Winkel (α1) von ca. 100° bildet, und/oder
wobei
- der Haltestift (12) so geformt und derart an dem Fahrzeugboden (104) fixierbar ist, dass seine Längsachse (L_{H}) im an dem Fahrzeugboden (104) montierten und mit dem Gestell (102) verbundenen Zustand der Bodenbefestigungsbaugruppe (10), betrachtet in Richtung einer Hauptlastrichtung (F) einer Last, die in einem definierten Lastfall auf das mit dem Gestellbefestigungselement (14) verbundene Bein (103a) des Gestells (102) wirkt, mit einer durch den Fahrzeugboden (104) definierten Ebene (E) einen Winkel (β1) kleiner 90° und insbesondere einen Winkel (β1) von ca. 80° bildet.

3. Bodenbefestigungsbaugruppe nach Anspruch 1 oder 2,
wobei
- der Aufnahmeraum (16) des Gestellbefestigungselements (14) so geformt ist, dass seine Längsachse (L_{A}) im an dem Fahrzeugboden (104) montierten Zustand der Bodenbefestigungsbaugruppe (10) mit einer Hauptlastrichtung (F) einer Last, die in einem definierten Lastfall auf das mit dem Gestellbefestigungselement (14) verbundene Bein (103a) des Gestells (102) wirkt, einen Winkel (α2) größer 90° und insbesondere einen Winkel (α2) von ca. 100° bildet, und/oder
wobei
- der Aufnahmeraum (16) des Gestellbefestigungselements (14) so geformt ist, dass seine Längsachse (L_{A}) im an dem Fahrzeugboden (104) montierten Zustand der Bodenbefestigungsbaugruppe (10), betrachtet in Richtung einer Hauptlastrichtung (F) einer Last, die in einem definierten Lastfall auf das mit dem Gestellbefestigungselement (14) verbundene Bein (103a) des Gestells (102) wirkt, mit einer durch den Fahrzeugboden (104) definierten Ebene (E) einen Winkel (β2) kleiner 90° und insbesondere einen Winkel (β2) von ca. 80° bildet.

4. Bodenbefestigungsbaugruppe nach einem der Ansprüche 1 bis 3,
wobei der Haltestift (12) mit mindestens einer ersten Nut (26) zur Aufnahme der Klemmvorrichtung (22) versehen ist, wobei sich die erste Nut (26) insbesondere im Wesentlichen parallel zu einer durch den Fahrzeugboden (104) definierten Ebene (E) erstreckt, sodass die Klemmvorrichtung (22) bei der Verbindung des Gestellbefestigungselements (14) mit dem Haltestift (12), geführt durch die erste Nut (26), insbesondere im Wesentlichen parallel zu der durch den Fahrzeugboden (104) definierten Ebene (E) verschiebbar ist.

5. Bodenbefestigungsbaugruppe nach einem der Ansprüche 1 bis 4,
wobei das Gestellbefestigungselement (14) im Bereich seines Aufnahmeraums (16) mit mindestens einer zweiten Nut (28) zur Aufnahme der Klemmvorrichtung (22) versehen ist, wobei sich die zweite Nut (28) insbesondere im Wesentlichen parallel zu einer durch den Fahrzeugboden (104) definierten Ebene (E) erstreckt, sodass die Klemmvorrichtung (22) bei der Verbindung des Gestellbefestigungselements (14) mit dem Haltestift (12), geführt durch die zweite Nut (28), insbesondere im Wesentlichen parallel zu der durch den Fahrzeugboden (104) definierten Ebene (E) verschiebbar ist.

6. Bodenbefestigungsbaugruppe nach einem der Ansprüche 1 bis 5,
wobei das Gestellbefestigungselement (14) mit einer Verbindungsbohrung (18) versehen ist, die dazu eingerichtet ist, ein Verbindungselement (114a, 114b) zur Verbindung des Beins (103a, 103b) des Gestells (102) mit dem Gestellbefestigungselement (14) aufzunehmen, wobei sich eine Längsachse (L_{V}) der Verbindungsbohrung (18) im Wesentlichen parallel oder im Wesentlichen senkrecht zu einer durch den Fahrzeugboden (104) definierten Ebene (E) erstreckt.

7. Bodenbefestigungsbaugruppe nach einem der Ansprüche 1 bis 6,
wobei die Klemmvorrichtung (22) mindestens einen Klemmsplint (24a, 24b) umfasst, der sich im an dem Fahrzeugboden (104) montierten Zustand der Bodenbefestigungsbaugruppe (10) im Wesentlichen parallel zu einer Längsachse (L_{G}) des Gestellbefestigungselements (14) und im Wesentlichen parallel zu einer durch den Fahrzeugboden (104) definierten Ebene (E) erstreckt, wobei der Klemmsplint (24a, 24b) insbesondere mit einer dritten Nut (40) versehen ist, die dazu eingerichtet ist, im an dem Fahrzeugboden (104) montierten Zustand der Bodenbefestigungsbaugruppe (10) den Haltestift (12) aufzunehmen.

8. Bodenbefestigungsbaugruppe nach einem der Ansprüche 1 bis 7,
wobei die Klemmvorrichtung (22) zwei Klemmsplinte (24a, 24b) umfasst,
- die dazu eingerichtet sind, einen Haltestift (12) beidseitig zu umgreifen, oder
- die dazu eingerichtet sind, mit jeweiligen Außenflächen zweier nebeneinander angeordneter Haltestifte (12) zusammenzuwirken, wobei
- die Klemmsplinte (24a, 24b) insbesondere mittels eines Verbindungsstücks (30) miteinander verbunden sind.

9. Bodenbefestigungsbaugruppe nach Anspruch 8,
wobei das Verbindungsstück (30) umfasst:
- ein erstes Element (32), das sich im an dem Fahrzeugboden (104) montierten Zustand der Bodenbefestigungsbaugruppe (10) zwischen den und/oder im Wesentlichen senkrecht zu den Klemmsplinten (24a, 24b) und/oder im Wesentlichen parallel zu einer durch den Fahrzeugboden (104) definierten Ebene (E) erstreckt, und/oder
- zwei zweite Elemente (34a, 34b), die sich im Wesentlichen koaxial zueinander von jeweiligen Enden der Klemmsplinte (24a, 24b) nach außen erstrecken, und/oder
- zwei dritte Elemente (36a, 36b), die sich im Wesentlichen parallel zueinander von jeweiligen Enden der zweiten Elemente (34a, 34b) erstrecken und die zweiten Elemente (34a, 34b) mit dem ersten Element (32) verbinden.

10. Gestellbefestigungssystem (100), umfassend:
- einen Fahrzeugboden (104),
- eine Mehrzahl von an dem Fahrzeugboden (104) fixierten Haltestiften (12),
- ein erstes Gestellbefestigungselement (14), das dazu eingerichtet ist, mit einem ersten Bein (103a) eines lösbar an dem Fahrzeugboden (104) zu befestigenden Gestells (102) verbunden zu werden und das mindestens einen Aufnahmeraum (16) zur Aufnahme eines Haltestifts (12) umfasst,
- ein zweites Gestellbefestigungselement (14), das dazu eingerichtet ist, mit einem zweiten Bein (103b) des lösbar an dem Fahrzeugboden (104) zu befestigenden Gestells (102) verbunden zu werden und das mindestens einen Aufnahmeraum (16) zur Aufnahme eines Haltestifts (12),
- eine erste Klemmvorrichtung (22), die dazu eingerichtet ist, in den Aufnahmeraum (16) des ersten Gestellbefestigungselements (14) eingeführt zu werden, um das erste Gestellbefestigungselement (14) formschlüssig mit mindestens einem Haltestift (12) zu verbinden, und
- eine zweite Klemmvorrichtung (22), die dazu eingerichtet ist, in den Aufnahmeraum (16) des zweiten Gestellbefestigungselements (14) eingeführt zu werden, um das zweite Gestellbefestigungselement (14) formschlüssig mit mindestens einem Haltestift (12) zu verbinden.

11. Gestellbefestigungssystem nach Anspruch 10,
wobei die Haltestifte (12), insbesondere in einer Reihe hintereinander, im Bereich einer in dem Fahrzeugboden (104) vorgesehenen Befestigungsschiene (108) angeordnet sind, die im Vergleich zu einer durch den restlichen Fahrzeugboden (104) definierten Ebene (E) abgesenkt ist, wobei ein aus dem Fahrzeugboden (104) ragendes Ende der Haltestifte (12) vorzugsweise im Wesentlichen in der durch den restlichen Fahrzeugboden (104) definierten Ebene (E) liegt.

12. Flugzeug (1000), das eine Bodenbefestigungsbaugruppe (10) nach einem der Ansprüche 1 bis 9 und/oder ein Gestellbefestigungssystem (100) nach Anspruch 10 oder 11 umfasst.

13. Verfahren zur lösbaren Befestigung eines Gestells (102) an einem Fahrzeugboden (104), wobei das Verfahren die Schritte umfasst:
- Fixieren mindestens eines Haltestifts (12) an dem Fahrzeugboden (104),
- Aufsetzen eines Gestellbefestigungselements (14) auf den Haltestift (12) derart, dass der Haltestift (12) in mindestens einem Aufnahmeraum (16) des Gestellbefestigungselements (14) aufgenommen wird,
- Einsetzen einer Klemmvorrichtung (22) in den Aufnahmeraum (16) des Gestellbefestigungselements (14), um das Gestellbefestigungselement (14) formschlüssig mit dem Haltestift (12) zu verbinden, und
- Verbinden eines Beins (103a, 103b) des Gestells (102) mit dem Gestellbefestigungselement (14).

14. Verfahren nach Anspruch 13,
wobei ein erstes und ein zweites Gestellbefestigungselement (14) mittels einer ersten und einer zweiten Klemmvorrichtung (22) jeweils formschlüssig mit mindestens einem Haltestift (12) verbunden werden und wobei ein erstes Bein (103a) des Gestells (102) mit dem ersten Gestellbefestigungselement (14) und ein zweites Bein (103b) des Gestells (102) mit dem zweiten Gestellbefestigungselement (14) verbunden wird.

15. Verfahren nach Anspruch 14,
wobei das erste Bein (103a) des Gestells (102) durch ein erstes Verbindungselement (114a) mit dem ersten Gestellbefestigungselement (14) verbunden wird, welches in eine Verbindungsbohrung (18) des ersten Gestellbefestigungselements (14) eingeführt wird, deren Längsachse (L_{V}) sich im Wesentlichen parallel zu einer durch den Fahrzeugboden (104) definierten Ebene (E) erstreckt, und/oder wobei das zweite Bein (103b) des Gestells (102) durch ein zweites Verbindungselement (114b) mit dem zweiten Gestellbefestigungselement (14) verbunden wird, welches in eine Verbindungsbohrung (18) des zweiten Gestellbefestigungselements (14) eingeführt wird, deren Längsachse (L_{V}) sich im Wesentlichen im Wesentlichen senkrecht zu einer durch den Fahrzeugboden (104) definierten Ebene (E) erstreckt.
